# EUROPÄISCHE PATENTSCHRIFT

(11) **EP 1 578 651 B1**
(45) Veröffentlichungstag und Bekanntmachung des Hinweises auf die Patenterteilung: **15.09.2010**
(21) Anmeldenummer: 03761366.8
(22) Anmeldetag: 28.05.2003
(51) Int. Cl.: B60T 8/88

(54) **VORRICHTUNG ZUR AUSWERTUNG VON ERSTEN SENSORSIGNALEN IN EINEM FAHRZEUG**
DEVICE FOR EVALUATING FIRST SENSOR SIGNALS IN A VEHICLE
DISPOSITIF POUR EVALUER DES PREMIERS SIGNAUX DE CAPTEURS DANS UN VEHICULE

(30) Priorität: 23.12.2002 DE 10260848
(43) Veröffentlichungstag der Anmeldung: 28.09.2005
(73) Patentinhaber: ROBERT BOSCH GMBH, 70442 Stuttgart (DE)
(72) Erfinder: WALZ, Volker, 74321 Bietigheim-Bissingen (DE); RECKNAGEL, Rolf-Juergen, 07747 Jena (DE)
(86) Internationale Anmeldenummer: PCT/DE2003/001736
(87) Internationale Veröffentlichungsnummer: WO 2004/060733

(56) Entgegenhaltungen:
- DE-A- 10 002 685
- DE-C- 19 936 596

## Beschreibung

### Stand der Technik

Die Erfindung geht aus von einer Vorrichtung zur Auswertung von ersten Sensorsignalen in einem Fahrzeug nach der Gattung des unabhängigen Patentanspruchs.

Aus DE 100 02 685 A1 ist es bekannt, mit einer Vorrichtung die Gierwinkelgeschwindigkeit zu bestimmen. Dabei soll ein Einbaufehler von Sensoren zur Ermittlung der Gierwinkelgeschwindigkeit erkannt werden. Dies wird durch einen Vergleich der Gierwinkelgeschwindigkeit von unterschiedlichen Sensormitteln erreicht. Die Gierwinkelgeschwindigkeit kann beispielsweise mit einem im Steuergerät verbauten Querbeschleunigungssensor und einem Lenkwinkelsensor ermittelt werden. Aus DE 199 36 596 C1 ist ein Verfahren zur Funktionsprüfung einer Fahrdynamikregelungssensorik bekannt. Dabei wird ein Gierratensensor, ein Querbeschleunigungssensor und/oder ein Lenkwinkelsensor verwendet.

### Vorteile der Erfindung

Die erfindungsgemäße Vorrichtung zur Auswertung von ersten Sensorsignalen in einem Fahrzeug mit den Merkmalen des unabhängigen Patentanspruchs hat den Vorteil, dass die Vorrichtung derart konfiguriert ist, dass sie die Einbaulage der ersten Sensoren durch eine Auswertung von zweiten Sensorsignalen von zweiten Sensoren überprüft. Damit werden ausgelagerte Beschleunigungssensoren als die ersten Sensoren in einem Fahrzeug in ihrer Einbaulage durch zentral angeordnete zweite Sensoren überprüft. Durch den Vergleich und die anschließende geeignete Auswertung der Signale der ersten und zweiten Sensoren soll die Einbaulage der Sensoren zueinander und die Übereinstimmung der Sensierrichtung und der Einstellung im Algorithmus, vorzugsweise einem Algorithmus zur Ansteuerung von Rückhaltesystemen, geprüft werden.

Es ist vorteilhaft ist, dass die zweiten Sensoren zentral im Fahrzeug angeordnet sind und dabei insbesondere in einem Steuergerät, beispielsweise einem Airbagsteuergerät oder einem Steuergerät für ein Fahrdynamiksystem, wie es beispielsweise ESP (Elektronisches Stabilitätsprogramm) ist. Die ersten Sensoren sind dagegen in der Fahrzeugseite als Seitenaufprallsensoren und/oder an der Fahrzeugfront, also für Frontaufprallsensoren als sogenannte Up-Front-Sensoren, angeordnet sein. Die Sensoren können jedoch im Fahrzeugheck oder an anderen Orten im Fahrzeug angeordnet sein.

Der Vergleich der beiden Sensorsignale bei Beschleunigungssensoren wird durch die integrierten Beschleunigungssignale durchgeführt, wobei dieser Vergleich für eine vorgegebene Zeit durchgeführt wird.

Durch die in den abhängigen Ansprüchen aufgeführten Maßnahmen und Weiterbildungen sind vorteilhafte Verbesserungen der im unabhängigen Patentanspruch angegebenen Vorrichtung zur Auswertung von ersten Sensorsignalen in einem Fahrzeug möglich.

Vorteilhafterweise gibt die Vorrichtung auch in Abhängigkeit von der Auswertung der ersten und zweiten Sensorsignale ein Signal ab. Dieses Signal kann bei einer Nichtübereinstimmung dazu verwendet werden, eine akustische und/oder optische und/oder haptische Warnung an einen Fahrer auszugeben.

### Zeichnung

Ausführungsbeispiele der Erfindung sind in der Zeichnung dargestellt und werden in der nachfolgenden Beschreibung näher erläutert.

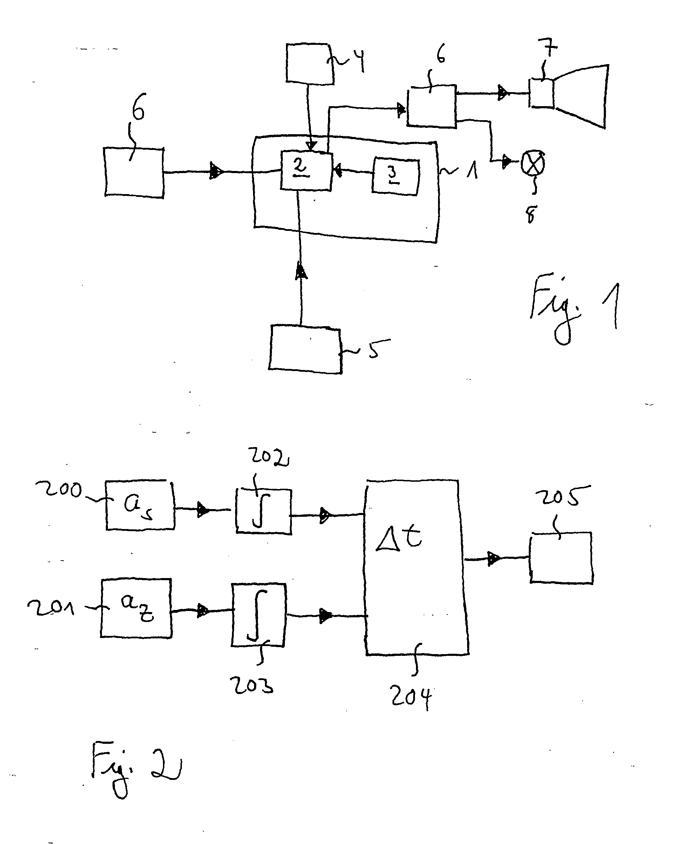

Es zeigen Figur 1 ein Blockschaltbild der erfindungsgemäßen Vorrichtung und Figur 2 ein Ablaufdiagramm zur Illustration des Signalvergleichs.

### Beschreibung

Im Fahrzeug werden bei Airbagauslösesystemen ausgelagerte Beschleunigungssensoren verwendet, deren Sensierrichtung im Algorithmus berücksichtigt werden muss. Die Einbaulage der Sensoren wird durch eine mechanische Codierung festgelegt, die den Einbau nur in einer Richtung ermöglicht. Im Algorithmus ist die Sensierrichtung über Parameter eingestellt. Es ist jedoch möglich, dass die Sensoren trotz mechanischer Codierung falsch verbaut sind oder aber die Parametereinstellung des Algorithmus nicht mit der Einbaulage der Sensoren übereinstimmt. Dies kann bislang während des Betriebs nicht überprüft werden.

Erfindungsgemäß wird daher vorgeschlagen, die Signale von diesen ersten Sensoren, also den ausgelagerten Sensoren, mit zweiten Sensorsignalen von zweiten Sensoren zu vergleichen, um in Abhängigkeit von dem Vergleich festzustellen, ob die Einbaulage der ersten Sensoren korrekt ist und damit auch die Einstellung im Auslösealgorithmus. Dieser Vergleich findet bei integrierten Beschleunigungssignalen statt, die für eine vorgegebene Zeit verglichen werden. Beispielsweise können die ausgelagerten Sensoren mit den Sensoren im Zentralgerät über einen ausreichend langen Zeitraum verglichen werden. Im Fall der Nichtübereinstimmung der Signale wird die Sensierrichtung als fehlerhaft erkannt, also die Einbaulage, und die Warnlampe wird beispielsweise angesteuert. Insbesondere bei Fahrmanövern wie Bremsvorgängen und Kurvenfahrten und eventuell auf Schlechtwegstrecken treten entsprechende Signale auf, die eine Auswertung ermöglichen. Dabei können auch Signale anderer Systeme herangezogen werden, beispielsweise ESP-Signale. Auf diese Weise können Abweichungen der im Algorithmus vorausgesetzten Sensierrichtung von der Einbaulage der Sensoren erkannt werden.

In Figur 1 ist in einem Blockschaltbild dargestellt, wie die erfindungsgemäße Vorrichtung aufgebaut ist. Ein zentrales Airbagsteuergerät 1 weist einen Prozessor 2 auf, der bei einem ersten Dateneingang Signale von im Steuergerät 1 zentral angeordneten Sensoren - also Beschleunigungssensoren - 3 erhält. Diese Sensoren können in x-y-, also in Fahrtrichtung und quer dazu, oder auch winklig zu der Fahrzeuglängs- und Fahrzeugquerrichtung angeordnet sein. Bei diesen Beschleunigungssensoren handelt es sich vorzugsweise um mikromechanisch hergestellte Beschleunigungssensoren. Über einen zweiten Dateneingang ist der Prozessor mit ausgelagerten Beschleunigungssensoren 4 verbunden, die vorzugsweise in der Fahrzeugseite oder in der Fahrzeugfront angeordnet sind. Über einen dritten Dateneingang ist der Prozessor 2 mit weiteren Beschleunigungssensoren 5 verbunden, die ebenfalls ausgelagert sind. Der Einfachheit halber sind hier Schnittstellenbausteine weggelassen worden. Auch andere übliche und notwendige Bausteine im Airbagsteuergerät 1 sind hier der Einfachheit halber weggelassen worden. Die ausgelagerten Sensoren 4 und 5 können auch über einen Bus mit dem Steuergerät 1 verbunden sein, also beispielsweise über einen Sensorbus. Über einen vierten Dateneingang ist der Prozessor 2 mit einem ESP-Steuergerät 6 verbunden. Auch das ESP-Steuergerät weist selbst Beschleunigungssensoren auf, sodass die Signale von diesen Beschleunigungssensoren zum Airbagsteuergerät 1 und dann zum Prozessor 2 vom ESP-Steuergerät 6 übertragen werden können. Über einen Datenausgang ist der Prozessor 2 mit einer Ansteuerung 6 verbunden. Diese Ansteuerung 6 steuert hier über einen ersten Ausgang einen Lautsprecher 7 und über einen zweiten Ausgang eine Warnlampe 8 an. In Abhängigkeit von der Überprüfung, die der Prozessor 2 hinsichtlich der Einbaulage der ausgelagerten Sensoren 4 und 5 durchführt, wird die Ansteuerung 6 angesteuert, und diese wird den Lautsprecher 7 und die Warnlampe 8 ansteuern. Es ist möglich, dass die Sensoren 4 und 5 jeweils mehrere Beschleunigungssensoren aufweisen, die auch in unterschiedlichen Raumrichtungen angeordnet sind. Diese Raumrichtungen sind bei Seitenaufprallsensoren neben der y-Richtung, also der Fahrzeugquerriclitung, z. B. auch die Fahrzeuglängsrichtung und die Hochachse, also die z-Achse des Fahrzeugs. Bei Up-Front-Sensoren, die ebenfalls an den Prozessor 2 zusätzlich oder anstatt der Sensoren 4 und 5 angeschlossen werden können, kann es sich auch um x- und y-Sensoren bzw. x- und z-Sensoren bzw. um alle drei Sensoren handeln. Die Sensoren 4 und 5 können selbst auch als unabhängige Airbagsteuergeräte ausgebildet sein. Diese Steuergeräte würden dann den ihnen zugeordneten Rückhaltemitteln Auslösebefehle in einer Crashsituation zusenden. Aber auch dann macht die Verbindung mit dem zentral angeordneten Airbagsteuergerät 1 Sinn, da in diesem Fall die Sensierrichtung der Sensoren in den Steuergeräten 4 und 5 auch mit der Einbaulage im zentralen Steuergerät der Sensoren 3 verglichen werden kann. Zusätzlich ist es möglich, dass die Einbaulage auch des ESP-Beschleunigungssensors im ESP-Steuergerät 6 überprüft werden kann.

Figur 2 zeigt in einem Ablaufdiagramm, wie der erfindungsgemäße Vergleich durchgeführt werden kann. In Block 200 wird ein Beschleunigungssignal eines der ausgelagerten Sensoren 4 oder 5 erzeugt. Dieses Signal wird in Block 202 ausgewertet, wobei die Auswertung in den Beschleunigungssensoren 4 und 5 durch entsprechende Elektronik bzw. Prozessortechnik vorgenommen werden kann oder im zentralen Steuergerät 1. Im Block 201 wird durch die Sensorik 3 ein zentral erzeugtes Beschleunigungssignal generiert, das ebenfalls in Block 203 ausgewertet wird. Beide Signale, das mathematisch bearbeitete Beschleunigungssignal des ausgelagerten Beschleunigungssensors und das des zentral angeordneten Beschleunigungssensors, werden im Block 204 für eine Zeit Δt miteinander verglichen. In Abhängigkeit von diesem Vergleich wird ein Signal 205 erzeugt, das zur Ansteuerung der Ansteuerung 6 verwendet werden kann. Es werden im Zeitraum Δt vorgegebene Abweichungen überschritten, wobei diese Abweichungen im vorgegebenen Zeitraum Δt aufkumuliert werden können oder es kann ein bestimmter Grenzwert in diesen Zeitraum Δt bei der Abweichung überschritten werden. Ist die Abweichung zu groß, dann wird eine Warnung über die Lampe 8 oder den Lautsprecher 7 ausgegeben. Die Warnung kann auch auf einem Display eines Bordcomputers ausgegeben werden. Es kann zusätzlich ein Fehlereintrag im Steuergerät abgelegt und die Funktion des Steuergeräts in geeigneter Weise beeinflußt werden. Der Fehlereintrag kann in einem flüchtigen oder einem dauerhaften Speicher abgelegt werden. Die Beeinflussung des Steuergeräts kann durch eine Umschaltung auf eine Backup-Lösung oder durch eine Deaktivierung einzelner Funktionen des Steuergeräts erreicht werden.

Unter der Auswertung des Signals wird eine Integration mit einem Schwellwertvergleich oder eine andere geeignete mathematische Operation verstanden werden.

## Patentansprüche

1. Vorrichtung zur Auswertung von ersten Sensorsignalen in einem Fahrzeug, wobei die Vorrichtung mit ersten Sensoren (4, 5), die die ersten Sensorsignale (aₛ) erzeugen, verbindbar ist, wobei die Vorrichtung derart konfiguriert ist, dass die Vorrichtung die jeweilige Einbaulage der ersten Sensoren (4, 5) durch eine Auswertung von zweiten Sensorsignalen (a_{z}) von zweiten Sensoren (3, 6) überprüft, **dadurch gekennzeichnet, dass** die ersten Sensoren (4, 5) von einem Steuergerät (1) ausgelagerte Beschleunigungssensoren sind, dass die zweiten Sensoren (3) zentral im Fahrzeug angeordnet sind, dass die Vorrichtung derart konfiguriert ist, dass die Vorrichtung die ersten und die zweiten Sensorsignale (aₛ, a_{z}) integriert und die derart umgeformten Sensorsignale für eine vorgegebene Zeit (Δt) vergleicht.

2. Vorrichtung nach Anspruch 1, **dadurch gekennzeichnet, dass** die zweiten Sensoren (3) in dem Steuergerät (1) angeordnet sind.

3. Vorrichtung nach einem der vorhergehenden Ansprüche, **dadurch gekennzeichnet, dass** die Beschleunigungssensoren in den Fahrzeugseiten und/oder der Fahrzeugfront angeordnet sind.

4. Vorrichtung nach einem der vorhergehenden Ansprüche, **dadurch gekennzeichnet, dass** die Vorrichtung derart konfiguriert ist, dass die Vorrichtung in Abhängigkeit von der Überprüfung ein Signal abgibt.

5. Vorrichtung nach Anspruch 4, **dadurch gekennzeichnet, dass** Mittel (7, 8) vorhanden sind, die in Abhängigkeit von dem Signal eine akustische und/oder optische und/oder haptische Warnung erzeugen.

6. Vorrichtung nach einem der vorhergehenden Ansprüche, **dadurch gekennzeichnet, dass** die zweiten Sensoren (3, 6) in einem Airbagsteuergerät oder einem Steuergerät für ein Fahrdynamiksystem angeordnet sind.

## Claims

1. Device for evaluating first sensor signals in a vehicle, wherein the device can be connected to first sensors (4, 5) which generate the first sensor signals (aₛ), wherein the device is configured in such a way that the device checks the respective installation position of the first sensors (4, 5) by an evaluation of second sensor signals (a_{z}) from second sensors (3, 6), **characterized in that** the first sensors (4, 5) are acceleration sensors which are exported from a control unit (1), **in that** the second sensors (3) are arranged centrally in the vehicle, **in that** the device is configured in such a way that the device integrates the first and the second sensor signals (aₛ, a_{z}) and compares the sensor signals shaped in such a way for a predefined time (Δt).

2. Device according to Claim 1, **characterized in that** the second sensors (3) are integrated in the control unit (1).

3. Device according to one of the preceding claims, **characterized in that** the acceleration sensors are arranged in the sides of the vehicle and/or the front of the vehicle.

4. Device according to one of the preceding claims, **characterized in that** the device is configured in such a way that the device outputs a signal as a function of the check.

5. Device according to Claim 4, **characterized in that** means (7, 8) are present which generate an acoustic and/or optical and/or haptic warning as a function of the signal.

6. Device according to one of the preceding claims, **characterized in that** the second sensors (3, 6) are arranged in an airbag control unit or a control unit for a vehicle movement dynamics control system.

## Revendications

1. Dispositif d'interprétation de premiers signaux de capteurs dans un véhicule, le dispositif pouvant être relié avec des premiers capteurs (4, 5) qui génèrent les premiers signaux de capteurs (aₛ), le dispositif étant configuré de telle sorte que le dispositif contrôle la position de montage respective des premiers capteurs (4, 5) par une évaluation de deuxièmes signaux de capteurs (a_{z}) de deuxièmes capteurs (3, 6), **caractérisé en ce que** les premiers capteurs (4, 5) sont des capteurs d'accélération déplacés par un module de commande (1), que les deuxièmes capteurs (3) sont disposés en un endroit central dans le véhicule, que le dispositif est configuré de telle sorte que le dispositif effectue une intégration des premiers et des deuxièmes signaux de capteurs (aₛ, a_{z}) et compare les signaux de capteur ainsi transformés pendant une durée (Δt) prédéfinie.

2. Dispositif selon la revendication 1, **caractérisé en ce que** les deuxièmes capteurs (3) sont disposés dans le module de commande (1).

3. Dispositif selon l'une des revendications précédentes, **caractérisé en ce que** les capteurs d'accélération sont disposés dans les côtés du véhicule et/ou à l'avant du véhicule.

4. Dispositif selon l'une des revendications précédentes, **caractérisé en ce que** le dispositif est configuré de telle sorte que le dispositif délivre un signal en fonction du contrôle.

5. Dispositif selon la revendication 4, **caractérisé en ce qu'**il existe des moyens (7, 8) qui génèrent une alerte sonore et/ou visuelle et/ou tactile en fonction du signal.

6. Dispositif selon l'une des revendications précédentes, **caractérisé en ce que** les deuxièmes capteurs (3, 6) sont disposés dans un module de commande de coussin gonflable de sécurité ou dans un module de commande pour un système dynamique de conduite.
